# EUROPEAN PATENT SPECIFICATION

(11) **EP 1 125 490 B1**
(45) Date of publication and mention of the grant of the patent: **28.01.2004**
(21) Application number: 01103781.9
(22) Date of filing: 16.02.2001
(51) Int. Cl.: A01D 34/30, A01D 34/135

(54) **Oil submerged driving system with adjustable guide controlled drive for operating double knives cutter bars**
In Öl gelagerte Antriebseinrichtung mit einstellbarem führungskontrolliertem Antrieb für Doppelmessermähbalken
Dispositif d'actionnement immergé dans l'huile avec entraînement adjustable et guide controllé pour actioner des bares de coupe à doubles couteaux

(30) Priority: 16.02.2000 IT BO000066
(43) Date of publication of application: 22.08.2001
(73) Proprietor: LOSI, VITTORIO di LOSI ROBERTO & C. S.N.C., 40061 MINERBIO (BOLOGNA) (IT)
(72) Inventor: Losi, Roberto, 40051 Altedo di Malalbergo (Bologna) (IT)
(74) Representative: Dall'Olio, Giancarlo

(56) References cited:
- EP-A- 0 035 805
- DE-A- 1 507 358
- DE-A- 3 711 265
- US-A- 4 023 334

## Description

The object of the present invention is to propose a simple and efficient driving system according to the preamble of claim 1 for operating the second cutter knife of a double knife bar, which features all the advantages obtained by including all mechanical means in an oil (or grease) bath within a gearbox.

### Description of the prior art

The double knife bars require mechanical operation capable of performing a reciprocating motion of the two cutter knives, in opposite directions. The advantages thus obtained are the following:
1) vibrations reduction (for operator's health protection as a prior aim). The stresses resulting from deceleration - acceleration of the first knife, when it reaches the stroke limit stop, are contemporary with the stresses of the second knife and have opposed sign. The obvious result is reciprocal compensation with reduction of the value resulting from the stresses;
2) increase of the relative speed of the knives with the same rpm speed on the power takeoff. This allows a better cut, smaller wear and fewer stresses.

On the other hand, it is obvious that a mechanism which operates two knives instead of only one, is mechanically much more complicated and fragile than a mechanism which operates only one knife.

Various kinds of operating mechanisms have been proposed so far, which present different disadvantages,.

Some of them were described in our Patent No. 01295653 granted on May 24, 1999.

The experience gained up to now demonstrate that, independently from the kind of the mechanism, problems mainly result from the difficulty to maintain efficient a mechanism, which often is not properly lubricated, due to negligence or forgetfulness, and which is subjected, during operation, to action of powder, soil and different agents present therein.

It is possible to resolve most of the above problems by submerging the mechanism into an oil bath, within the gearbox.

However, this solution appeared extremely cumbersome also due to the system complexity: the rotary motion derived from the power takeoff is oriented crosswise to the knives sliding axis, by means of a bevel gear pair.

Two eccentric pins arranged on the driven gear operate two levers, formed by more parts, pivoted on a common axis.

The result is the alternate oscillating motion of the two levers, in opposite directions, so as to operate the two knives on the bar.

Although extremely efficient, the above described system has not been widely used, because of high construction costs.

The present invention resolves the problem of matching the reliability of the oil bath system to the use of a mechanism as simple as possible by an oil submerged driving system as characterized in claim 1.

Further advantageous arrangements and developments of the invention appear from the dependent claims.

The enclosed drawings 1 to 3 show an oil submerged driving system with only the lower knife, for sake of explanation.

Actually, the use of one or more elements, the so-called drive control guides, connected with the second knife by a suitably shaped element and guided through suitable seats made in the oil bath gearbox, allows to obtain the movement of the second knife from the rear part of only one pivoted lever, which results in the following advantages:
1) Extreme simplification of the mechanism, which results in the considerable reduction of the number of the mechanical elements necessary for the mechanism to operate. Consequently, the costs are significantly reduced.
2) The guided drive system allows to operate the second knife also if the driving member is very far (otherwise impossible). Actually, the whole of elements formed by the drive control guides and the connecting particular, acts as a knife head, yet, its wearing points are immersed in oil, which constitutes an absolute innovation.
3) All the remaining wearing areas are immersed in the oil within the gearbox. Thus, these parts are protected and lubricated.
4) It is possible to adjust the clearances formed between the lever and the drive control guides.

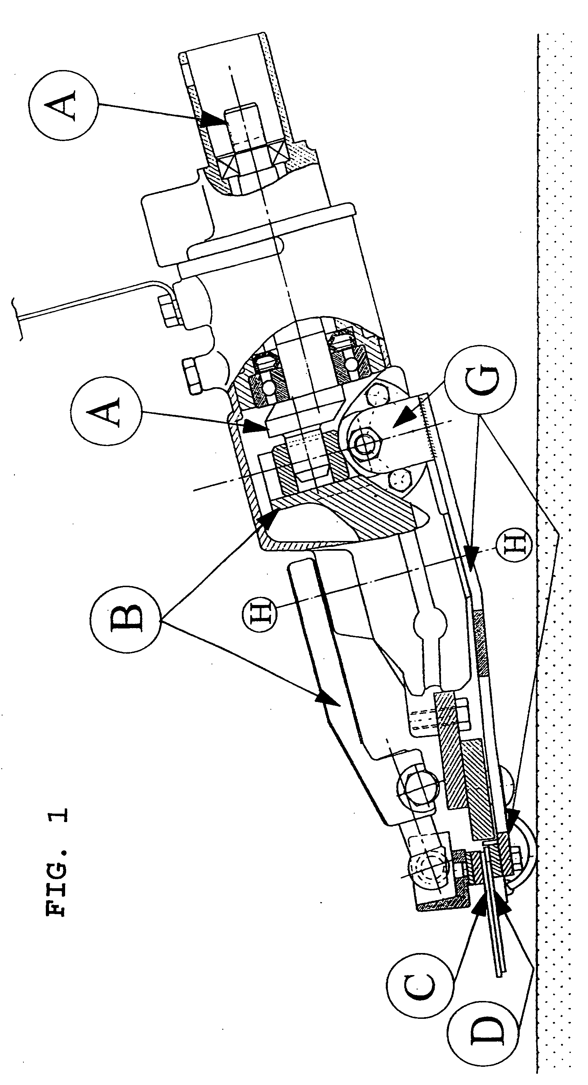

Operating mechanism: (Figure 1) an eccentric shaft (particular A) transfers the rotary motion from the power takeoff to a lever (particular B) pivoted on the axis H inside the gearbox.

The oscillation obtained on the fore end of the lever drives the first knife (particular C) into reciprocation.

The rear end of the lever drives the second knife (particular D) to move in the opposite direction.

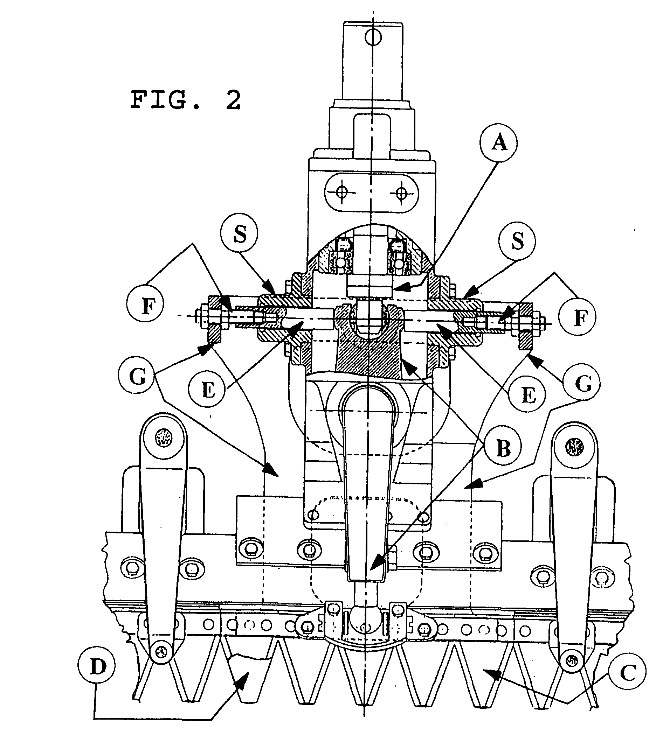

It is to be noted that the size and the distance between the rear part of the pivoted lever and the bar, would make it impossible to operate the knife to slide on a determined axis, if seats (particular S) were not made in the gearbox (Figure 2).

The seats (particular S) control the sliding of drive control guides (particular E) which are pushed by the lever oscillation and transmit the motion to the second knife by the connecting element (particular G) without any misalignment of the second knife.

It is to be pointed out that the whole formed by the connecting element and the drive control guides acts as a knife head and that its wearing parts are immersed in oil.

The above described solution is an absolute novelty.

The possibility to adjust the clearance between the lever (particular B) and the drive control guides (particular E) by stud bolts (particular F) and relative screw nuts ensures not only the indispensable lubrication by the oil contained in the gearbox, but also the system functionality and efficiency.

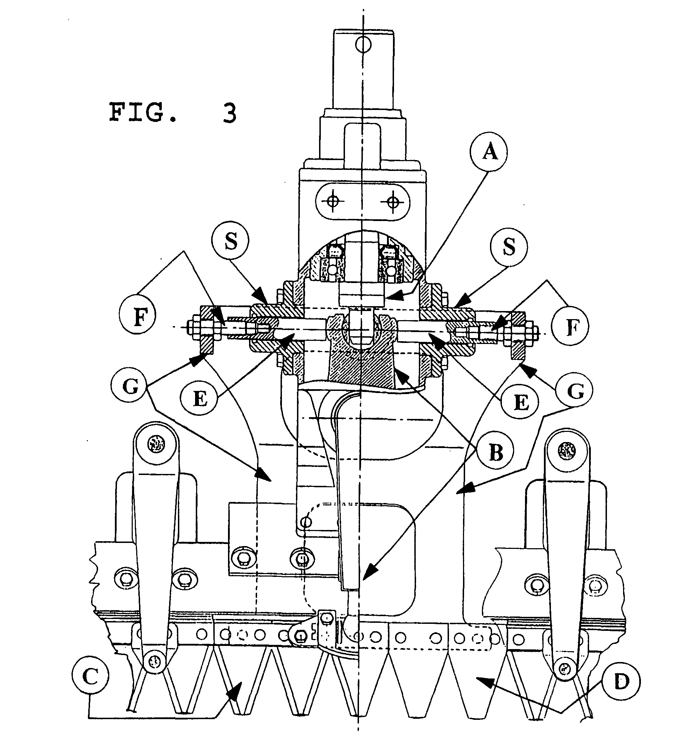

Figure 3, added for clarity, shows, in the right half part, a possible embodiment of the connecting element, situated under the oil bath gearbox.

## Claims

1. Oil submerged driving system with adjustable guide controlled drive for operating double knives cutter bars, the system being contained in a box-like container and including main control means (B), pivoted on said box-like container on an axis (H) perpendicular to said container, said control means (B) being connected, with a first working end, situated inside said box-like container, to actuating means (A), and with a second working end, situated outside the box-like container, to a first cutter knife (C) of said knives, said control means (B) being driven, by said actuating means (A), into alternate oscillation on said axis (H), so as to drive said first knife (C) into reciprocation, the system being **characterized in that** it includes connection means (E,G) supported by said box-like container and linked to said main control means (B) at said first inner working end and connected to a second cutter knife (D) of said knives, said connection means (E,G) being operated by said main control means (B) so as to drive said second cutter knife (D) into reciprocation in direction opposite with respect to the reciprocation of said first cutter bar (C).

2. System, according to claim 1, **characterized in that** said connection means (E,G) include at least one drive control guide (E) equipped with a first head sliding in a relative seat (S), which is made in said box -like container, and with a second head, which is fastened, by fastening means (F), to an element (G) connecting to said second cutter knife (D), said drive control guide being operated by said first inner working end of said main control means (B).

3. System, according to claim 1, **characterized in that** said connection means (E,G) include at least one drive control guide (E) having a first head sliding in a relative seat (S), which is formed by a support placed on said box -like container, and with a second head, which is fastened, by fastening means (F), to an element (G) connecting to said second cutter knife (D), said drive control guide being operated by said first inner working end of said main control means (B).

4. System, according to claim 2 or 3, **characterized in that** the relative positioning of said first head of the drive control guides (E) with respect to said first working end of said main control means (B) is adjustable by said fastening means (F).

5. System, according to claim 1, **characterized in that** said main control means (B) include a first type lever and **in that** said actuating means (A) include an eccentric control shaft.

6. System, according to any of previous claims, **characterized in that** said first working end of said main control means (B) and said drive control guides (E) work completely immerse in an oil bath.

7. System, according to any of previous claims, **characterized in that** said second knife (D) is situated under said first knife (C).

8. System, according to any of previous claims, **characterized in that** said second knife (D) is situated over said first knife (C).

## Patentansprüche

1. In Öl gelagertes Antriebssystem mit einstellbarem, führungskontrollierten Antrieb zum Betrieb von Doppelmessermähbalken, wobei das System in einem kastenartigen Behälter untergebracht ist und Hauptsteuermittel (B) aufweist, welche an dem kastenartigen Behälter auf einer Achse (H) senkrecht zu dem Behälter drehbar gelagert sind, wobei die Steuermittel (B) über ein erstes Arbeitsende, das sich im Inneren des kastenartigen Behälters befindet, mit Betätigungsmitteln (A) verbunden ist, und über ein zweites Arbeitsende, das sich außerhalb des kastenartigen Behälters befindet, mit einem ersten Mähmesser (C) der genannten Messer verbunden ist, wobei die Steuermittel (B) von den Betätigungsmitteln (A) zu einer abwechselnden Hin- und Herbewegung auf der Achse (H) angetrieben werden, um das erste Messer (C) in eine Hin- und Herbewegung zu versetzen, wobei das System **dadurch gekennzeichnet ist, dass** es Verbindungsmittel (E, G) enthält, die von dem kastenartigen Behälter getragen werden und mit den Hauptsteuermitteln (B) an dem ersten inneren Arbeitsende verbunden sind und mit einem zweiten Mähmesser (D) der genannten Messer verbunden sind, wobei die Verbindungsmittel (E, G) von den Hauptsteuermitteln (B) betrieben werden, um das zweite Mähmesser (D) in eine Hin- und Herbewegung in entgegengesetzter Richtung zu der Hin- und Herbewegung des ersten Mähbalkens (C) zu versetzen.

2. System nach Anspruch 1, **dadurch gekennzeichnet, dass** die verbindungsmittel (E, G) mindestens eine Antriebssteuerführung (E) einschließen, die mit einem ersten Kopf versehen ist, der in einem relativen Sitz (S) gleitend gelagert ist, welcher in dem kastenartigen Behälter ausgebildet ist, sowie mit einem zweiten Kopf, der durch Befestigungsmittel (F) an einem Element (G) befestigt ist, das eine Verbindung zu dem zweiten Mähmesser (D) herstellt, wobei die Antriebsateuerführung durch das erste innere Arbeitsende der Hauptsteuermittel (B) betrieben wird.

3. System nach Anspruch 1, **dadurch gekennzeichnet, dass** die Verbindungsmittel (E, G) mindestens eine Antriebesteuerführung (E) mit einem ersten Kopf aufweisen, der in einem relativen Sitz (S) gleitend gelagert ist, welcher von einer Halterung gebildet wird, die auf dem kastenartigen Behälter aufgesetzt ist, sowie mit einem zweiten Kopf, der durch Befestigungsmittel (F) an einem Element (G) befestigt ist, das eine Verbindung zu dem zweiten Mähmesser (D) herstellt, wobei die Antriebssteuerführung durch das erste innere Arbeitsende der Hauptsteuermittel (B) betrieben wird.

4. System nach Anspruch 2 oder 3, **dadurch gekennzeichnet, dass** die relative Positionierung des ersten Kopfes der Antriebssteuerführungen (F) bezüglich des ersten Arbeitsendes der Hauptsteuermittel (B) über die Befestigungsmittel (F) einstellbar ist.

5. System nach Anspruch 1, **dadurch gekennzeichnet, dass** die Hauptsteuermittel (B) eine erste Hebelart aufweisen, und dass die Betätigungsmittel (A) eine Exzentersteuerwelle aufweisen.

6. System nach einem der vorhergehenden Ansprüche, **dadurch gekennzeichnet, dass** das erste Arbeitsende der Hauptsteuermittel (B) und die Antriebssteuerführungen (E) unter vollständiger Einlagerung in einem Ölbad arbeiten.

7. System nach einem der vorhergehenden Ansprüche, **dadurch gekennzeichnet, dass** das zweite Messer (D) unter dem ersten Messer (C) angeordnet ist.

8. System nach einem der vorhergehenden Ansprüche, **dadurch gekennzeichnet, dass** das zweite Messer (D) über dem ersten Messer (C) angeordnet ist.

## Revendications

1. Système d'entraînement immergé dans de l'huile comportant une unité d'entraînement commandée par des guides ajustables pour l'entraînement de barres de coupe à double couteaux, le système étant logé dans un récipient en forme de boîte et incluant des moyens de commande principaux (B), pivotants sur ledit récipient en forme de boîte sur un axe (H) perpendiculaire audit récipient, lesdits moyens de commande (B) étant raccordés au niveau d'une première extrémité de travail, située à l'intérieur dudit récipient en forme de boite, à des moyens d'actionnement (A), et au niveau d'une seconde extrémité de travail, située à l'extérieur dudit récipient en forme de boite, à un premier couteau (C) parmi lesdits couteaux, lesdits moyens de commande (B) étant entraînés, par lesdits moyens d'actionnement (A), selon une oscillation alternée autour dudit axe (H) de manière à entrainer en va-et-vient ledit premier couteau (C), le système étant **caractérisé en ce qu'**il inclut les moyens de raccordement (E, G) supportés par ledit récipient en forme de boîte et articulés auxdits moyens de commande principaux (B) au niveau de ladite première extrémité intérieure de travail et raccordés à un second couteau (D) parmi lesdits couteaux, lesdits moyens de raccordement (E, G) étant actionnés par lesdits moyens de travail principaux (B) de manière à entraîner ledit second couteau (D) en va-et-vient dans une direction opposée au déplacement en va-et-vient de ladite première barre de coupe (C).

2. Système selon la revendication 1, **caractérisé en ce que** lesdits moyens de raccordement (E, G) incluent au moins un guide de commande d'entraînement (E) équipé d'une première tête qui glisse dans un siège relatif (S), qui est formé dans ledit récipient en forme de boîte, et d'une seconde tête, qui est fixée, par des moyens de fixation (F) à un élément (G) raccordé audit second couteau (D), ledit guide de commande d'entraînement étant actionné par ladite première extrémité de travail intérieure desdits moyens de commande principaux (B).

3. Système selon la revendication 1, **caractérisé en ce que** lesdits moyens de raccordement (E, G) incluent au moins un guide de commande d'entraînement (E) possédant une première tête glissant dans un siège relatif (S) qui est formé par un support placé sur ledit récipient en forme de boîte, et une seconde tête, qui est fixée, par des moyens de fixation (F), à un élément (G) raccordé audit second couteau (D), ledit guide de commande d'entraînement étant actionné par ladite première extrémité de travail intérieure desdits moyens de commande principaux (B).

4. Système selon la revendication 2 ou 3, **caractérisé en ce que** le positionnement relatif de ladite première tête des guides de commande d'entraînement (E) par rapport à ladite première extrémité de travail desdits moyens de commande principaux (B) peut être ajusté par lesdits moyens de fixation (F).

5. Système selon la revendication 1, **caractérisé en ce que** lesdits moyens de commande principaux (B) incluent un levier d'un premier type et **en ce que** lesdits moyens d'actionnement (A) incluent un arbre de commande excentrique.

6. Système selon l'une quelconque des revendications précédentes, **caractérisé en ce que** ladite première extrémité de travail desdits moyens de commande principaux (B) et lesdits guides de commande d'entraînement (E) travaillent en étant complètement immergés dans un bain d'huile.

7. Système selon l'une quelconque des revendications précédentes, **caractérisé en ce que** ledit second couteau (D) est situé au-dessous dudit premier couteau (C).

8. Système selon l'une quelconque des revendications précédentes, **caractérisé en ce que** ledit second couteau (D) est situé au-dessus dudit premier couteau (C).
